# EUROPEAN PATENT APPLICATION

(11) **EP 1 605 444 A2**
(43) Date of publication of application: **14.12.2005**
(21) Application number: 05253458.3
(22) Date of filing: 04.06.2005
(51) Int. Cl.: G11B 7/0065, G11B 19/20

(54) **Positioning device**

(30) Priority: 09.06.2004 JP 2004171558
(71) Applicant: ALPS ELECTRIC CO., LTD., Tokyo 145 (JP)
(72) Inventor: Someno, Yoshihiro, Otsuka-sho,Ota-ku,Tokyo (JP)
(74) Representative: Kensett, John Hinton

(57) **Abstract**

A positioning device capable of performing accurate positioning of holograms (41) formed on a recording medium (40) is disclosed. The positioning device includes a rotation driving unit (1) for rotating a disk-shaped recording medium in a peripheral direction, a horizontal driving unit (3) for moving the recording medium in a horizontal direction. The positioning of the recording medium is performed by the rotation driving unit and the horizontal driving unit. The rotation driving unit includes a central driving unit (10) for rotating the recording medium on a central portion and a peripheral driving unit (20) for rotating the recording medium at a peripheral edge. The peripheral driving unit includes a rotating part (21) which is rotatable separately from the central driving unit. The rotating part is formed in the shape of a disk whose diameter is smaller than the recording medium and is disposed in the horizontal direction to the disk-shaped recording medium. As a peripheral edge of the rotating part abuts the peripheral edge of the recording medium, with the peripheral rotation, the peripheral driving unit rotates the recording medium.

## Description

### BACKGROUND OF THE INVENTION

### 1. Field of the Invention

The present invention relates to a positioning device which performs the positioning with respect to an optical system by moving a disk-shaped recording medium in a hologram storage apparatus, and in particular, to a positioning device which performs accurate positioning of holograms formed in an area away from the center of the recording medium.

### 2. Description of the Related Art

As a storage apparatus used in a conventional computer, a storage apparatus which performs recording and reading information on a recording medium with magnetism and light is widely used. As a recording medium using magnetism, a hard disk is known. As a storage apparatus using light, a CD and a DVD are known. These storage apparatuses have made a great advance in recording density in order to meet the needs of high capacity. Now, a storage apparatus using the principle of hologram is under development as a new means for increasing capacity.

A hologram storage apparatus forms holograms after making encoded object light interfere with reference light on a recording medium, and then stores information on the recording medium. The object light is irradiated on the recording medium in the form of two-dimensional digital data. When information is reproduced, two-dimensional digital data is reproduced by irradiating only the reference light onto the recording medium. Therefore, the optical system of the object light and the reference light, and the recording medium needs be accurately positioned. The positioning is performed by moving the recording medium in an in-plane direction after fixing the optical system. Such a hologram storage apparatus is disclosed, for example, in Japanese Unexamined Patent Application Publication No. 2001-93157.

In a conventional hologram device, a recording medium is moved in the horizontal direction by providing a slider which traverses a motor after the recording medium is rotated in a peripheral direction while the central portion of the disk-shaped recording medium is connected to the motor. This enables the recording medium to be positioned with respect to the optical system.

In a positioning device of the conventional hologram storage apparatus, since a recording medium is rotated in a peripheral direction on the center of the recording medium as a driving shaft, holograms formed closer to the center of the recording medium can be positioned relatively accurately. However, holograms formed away from the center of the recording medium cannot be positioned accurately, because an error of the holograms formed away from the center is twice that of the holograms formed closer to the center, which make it difficult to perform accurate positioning.

### SUMMARY OF THE INVENTION

In order to solve the problems, an object of the present invention is to provide a positioning device capable of performing accurate positioning of holograms formed on a recording medium.

In order to achieve the above-mentioned object, a positioning device related to the present invention includes a rotation driving unit for rotating a disk-shaped recording medium in a peripheral direction, a horizontal driving unit for moving the recording medium in a horizontal direction. The positioning of the recording medium is performed by the rotation driving unit and the horizontal driving unit. The rotation driving unit includes a central driving unit for rotating the recording medium on a central portion and a peripheral driving unit for rotating the recording medium at a peripheral edge. The horizontal driving unit has a horizontal actuating part for moving the central driving unit in the horizontal direction. The peripheral driving unit includes a rotating part which is rotatable separately from the central driving unit. The rotating part is formed in the shape of a disk whose diameter is smaller than the recording medium and is disposed in the horizontal direction to the disk-shaped recording medium. As a peripheral edge of the rotating part abuts the As a peripheral edge of the rotating part abuts the peripheral edge of the recording medium, the peripheral rotation of the rotating part rotates the recording medium.

The peripheral driving unit may have a rotational angle detector for detecting the rotation of the recording medium according to the peripheral rotation of the rotating part.

The recording medium and the rotating part may be respectively formed with a gear-shaped groove having a concave and convex shape. The recording medium and the rotating part are arranged in the horizontal direction such that the groove of the recording medium meshes with the groove of the rotating part.

In the device related to the present invention, the peripheral driving unit may have a horizontal actuating part for making the rotating part movable in the horizontal direction to the recording medium. The peripheral edge of the rotating part is brought into contact with or separated from the peripheral edge of the recording medium by the horizontal actuating part.

The peripheral driving unit may have a vertical actuating part which is made by arranging an elastic minute driving element in the vertical direction to the rotating part. The vertical actuating part moves the rotating part in the vertical direction the vertical movement of the rotating part moves the recording medium.

### BRIEF DESCRIPTION OF THE DRAWINGS

FIG. 1 is a plan view showing the relation between a recording medium and a positioning device according to the present embodiment;
FIG. 2 is a cross-sectional view taken along the line II-II;
FIG. 3 is a view showing the process (a to d) of the positioning the recording medium;
FIG. 4 is a cross-sectional view of operation showing the vertical positioning of the recording medium by a peripheral driving unit, in which a central driving unit and a vertical driving unit are omitted; and
FIG. 5 is a view showing the relation between a recording medium and a positioning device according to a second embodiment.

### DESCRIPTION OF THE PREFERRED EMBODIMENT

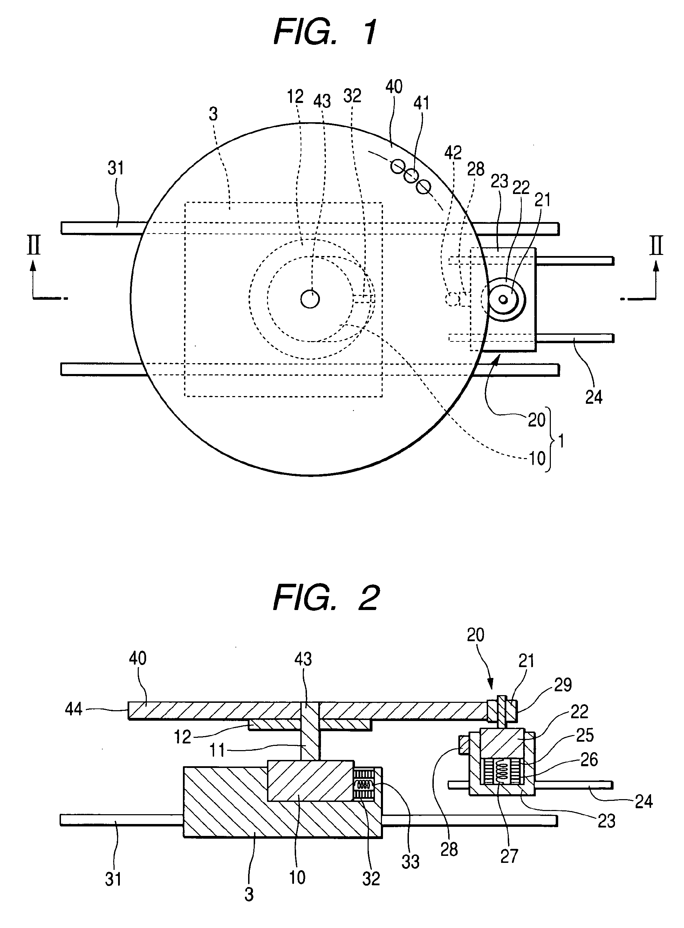

Hereinafter, preferred embodiments of the present invention will be described in detail with reference to the drawings. FIG. 1 is a plan view showing the relation between a recording medium 40 and a positioning device according to the present embodiment. FIG. 2 is a cross-sectional view taken along the line II-II of FIG. 1. In the respective drawings, the positioning device according to the present embodiment is used for performing accurate positioning of the disk-shaped recording medium 40 with respect to a read position 42 of the optical system in a hologram storage apparatus, and includes a rotation driving unit 1 for rotating the recording medium 40 in a peripheral direction and a horizontal driving unit 3 for moving the recording medium 40 in the horizontal direction.

The recording medium 40 of the present embodiment is formed in the shape of disk-shaped and records information thereon by forming an interference fringe of object light having encoded information in units of pages with reference light on a recording portion as holograms 41. Also, the information is reproduced and read by the same light as the reference light used in forming the holograms 41. A plurality of holograms 41 is respectively arranged on a concentric circle on the recording medium 40. The recording medium 40 is required to be positioned with accuracy in a horizontal and peripheral direction with respect to the read position 42 of the optical system in order to read information. For example, about 10,000 data are arranged and recorded in the holograms 41 of f2 mm. If the position of the data is not correctly aligned with the position of an image sensor, information cannot be read. Here, the pitch of a pixel is about 5 µm. If the degree of accuracy of positioning is set to 3%, the pitch becomes 0.15 µm, which demonstrates that very high-accuracy positioning is required.

The rotation driving unit 1 which rotates the recording medium 40 in the peripheral direction includes a central driving unit 10 which rotates the recording medium 40 on a central portion 43 and a peripheral driving unit 20 which rotates the recording medium 40 at a peripheral edge 44.

The central driving unit 10 has a rotatable driving shaft 11 which fixed the recording medium 40, and the driving shaft 11 has a mounting table 12 for mounting the recording medium 40 thereon. The central driving unit 10 can rotates the recording medium 40 in the peripheral direction by rotating the driving shaft 11 in the peripheral direction.

The peripheral driving unit 20 has a rotating part 21 which is rotatable separately from the central driving unit 10, and has a driving unit 22 for rotating the rotating part 21, a horizontal actuating part 23 for moving the rotating part 21 in the horizontal direction, and a vertical actuating part 25 for moving the rotating part 21 in the vertical direction. Here, the rotating part 21 is formed in the shape of a disk whose diameter is sufficiently smaller than the recording medium 40. The rotating part 21 is disposed in the horizontal direction to the recording medium 40 so that its peripheral edge 29 abuts the peripheral edge 44 of the recording medium 40. The driving unit 22 rotates the rotating part 21 in the peripheral direction. This rotation allows the driving unit 22 to rotate the recording medium 40 by friction. The peripheral driving unit 20 has a rotational angle detector 28. The rotational angle detector 28 detects the rotational angle of the recording medium 40 which accompanies the rotation of the rotating part 21 in the peripheral direction.

The horizontal actuating part 23, which is formed in the shape of a box, accommodates the driving unit 22 therein, and is disposed on a guide 24 arranged in the horizontal direction, and can move the rotating part 21 in the horizontal direction as the horizontal actuating part 23 moves on the guide 24.

The vertical actuating part 25 is composed of minute driving elements 26 which expand and contract linearly, and is disposed vertically to the rotating part 21 so as to move the rotating part 21 in the vertical direction. The vertical actuating part 25 moves the rotating part 21 in the vertical direction. With the movement of the rotating part 21, the recording medium 40 can be moved in the vertical direction. Here, the vertical actuating part 25 can stably performs the actuation of the rotating part 21 because the vertical actuating part 25 is provided with an elastic body 27 in the vertical direction, which resists against the minute driving elements 26.

Here, the minute driving element 26, which expands and contracts by the application of an electric field, is composed of piezoelectric elements or the like. The vertical actuating part 25 is not limited to the construction of the present embodiment. For example, the minute driving elements 26 may be provided on both sides in the vertical direction.

The horizontal driving unit 3 for moving the recording medium 40 in the horizontal direction is formed in the shape of a box to accommodate the central driving unit 10 therein, and is formed substantially integrally with the central driving unit 10. The horizontal driving unit 3 is disposed on the guide 31 arranged in the horizontal direction. As the horizontal driving unit 3 moves on the guide 31, the central driving unit 10 moves in the horizontal direction. With the movement of the central driving unit 10, the recording medium 40 can be moved in the horizontal direction. [0026]

Further, the horizontal driving unit 3 is connected to the central driving unit 10 via minute driving elements 32 which expand and contract linearly. As the minute driving element 32 is arranged in the horizontal direction, the central driving unit 10 is movable slightly in the horizontal direction. Therefore, the recording medium 40 can move in the horizontal direction with the movement of the central driving unit 10. Since an elastic body 33 is disposed in the direction parallel to the central driving unit 10 so as to resist against the minute driving element 32, the movement of the central driving unit 10 can be stably performed. Here, the arrangement of the minute driving element 32 and the elastic body 33 is not limited to the present embodiment. For example, the minute driving elements 32 may be provided on both sides in the vertical direction.

When the recording medium 40 is moved by the horizontal driving unit 3 and the central driving unit 10, if the peripheral edge 29 of the rotating part 21 is in contact with the peripheral edge 44 of the recording medium 40, the rotating part 21 resist against the operation of the recording medium 40. Accordingly, when the recording medium 40 is moved by the horizontal driving unit 3 and the central driving unit 10, the peripheral driving unit 20 moves the rotating part 21 in the horizontal direction by the horizontal actuating part 23 to make the rotating part 21 escape to a position where the peripheral edge 29 of the rotating part 21 does not abut the peripheral edge 44 of the recording medium 40.

The recording medium 40 is accommodated in a disk case in order to protect a recording part. The disk case has a mechanical shutter, and the disk case shields the recording medium from the outside by closing the shutter when the recording medium 40 is not used. The peripheral driving unit 20 prevents the collision with the shutter by moving the rotating part 21 in the horizontal direction with the horizontal actuating part 23 according to the opening and closing of the mechanical shutter.

Also, the recording medium 40 moves in the horizontal direction and rotates in the peripheral direction with the central portion 43 fixed to the driving shaft 11. Since the recording medium 40 does not have a supporting part, vibration becomes larger. In this case, the rotating part 21 abuts the peripheral edge 44 of the recording medium 40 to become a supporting part for supporting the recording medium 40, so that the vibration of the recording medium 40 can be prevented.

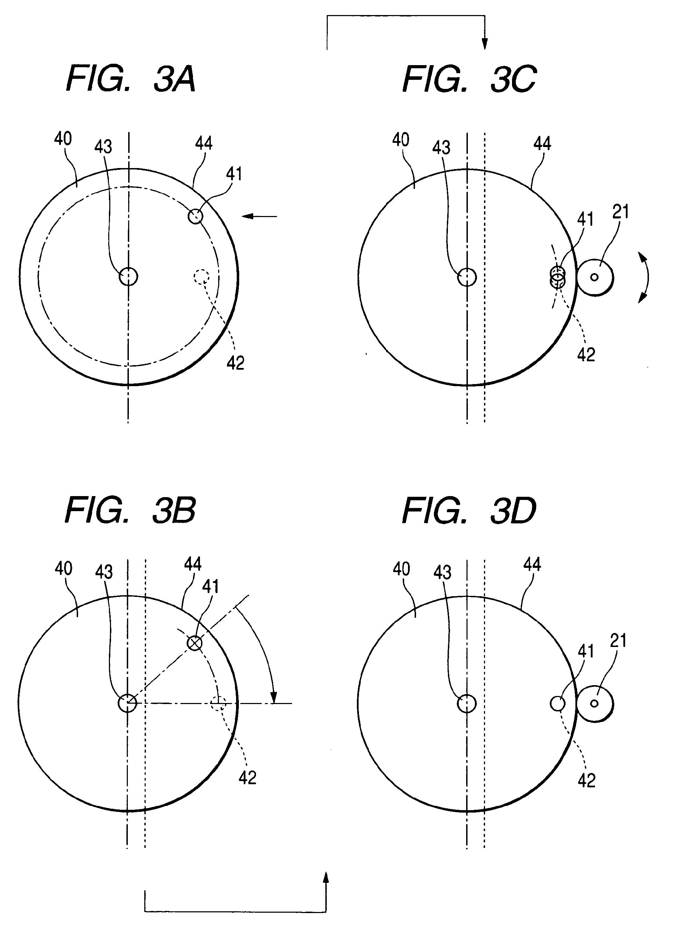

According to the embodiment, the process of the positioning the recording medium 40 with respect to the optical system will be described with reference to FIG. 3. FIG. 3 is a schematic view showing only the recording medium 40 and the rotating part 21 of the peripheral driving unit 20, by simplifying the process of the positioning the hologram 41 formed on the recording medium 40 with respect to the read position 42 of the optical system. FIG. 3A indicates the state where the horizontal driving unit 3 performs the horizontal positioning of the recording medium 40. A plurality of holograms 41 are formed on the concentric circle on the recording medium 40. The horizontal positioning of the recording medium 40 is performed by moving the recording medium 40 so that the read position 42 is in alignment with the concentric circle on which a hologram 41 is formed.

The recording medium 40 is moved in the horizontal direction as the horizontal driving unit 3 moves on the guide. Since the horizontal driving unit 3 can move the recording medium 40 slightly in the horizontal direction with the minute driving element 32 with the movement of the central driving unit 10, the horizontal positioning of the recording medium 40 can be accurately performed. Accordingly, when the horizontal driving unit 31 moves the recording medium 40 while moving on the guide 31, the horizontal driving unit 3 needs only to move the recording medium 40 greatly, and is not required to position the recording medium with high accuracy, which makes it possible to reduce cost.

FIG. 3B shows the process of performing the peripheral positioning by the central driving unit 10. As the central driving unit 10 rotates the hologram 41 to the read position 42, the peripheral positioning of the recording medium 40 is performed.

The peripheral positioning can be accurately performed by the central driving unit 10 in the case of the hologram 41 formed closer to the central portion 43 of the recording medium 40. However, in the case of the hologram 41 formed away from the central portion 43 of the recording medium 40, since the distance from the central portion 43 increases, the rotation components becomes larger, which result a greater error. Accordingly, when the information recorded at a position remote from the central portion 43 of the recording medium 40, the central driving unit 10 cannot perform accurate peripheral positioning.

Since the central driving unit 10 cannot perform the accurate peripheral positioning, recorded information cannot be read in such a way. Therefore, the peripheral driving unit 20 performs accurate positioning. As shown in FIG. 3C, the horizontal actuating part 23 moves the peripheral driving unit 20 to cause the peripheral edge 29 of the rotating part 21 to abut the peripheral edge 44 of the recording medium 40. As the rotating part 21 is rotated, the recording medium 40 is rotated by friction with the rotation. Even in a case in which the hologram 41 is formed away from the central portion 43 of the recording medium 40, since the diameter of the rotating part 21 is far smaller than the recording medium 40, an error decreases by virtue of the ratio of the diameter of the rotating part 21 to the recording medium 40, so that the recording medium 40 can be slightly rotated.

In this way, as shown in FIG. 3D, the recording medium 40 can be accurately positioned with respect to the read position 42. Since the peripheral driving unit 20 can accurately perform the peripheral positioning of the recording medium 40, the central driving unit 10 needs only to move the recording medium 40 greatly, and is not required to position the recording medium with high accuracy, which makes it possible to reduce cost.

Since the recording medium 40 rotates by friction accompanying the rotation of the rotating part 21, the peripheral positioning by the peripheral driving unit 20 may cause slip between the peripheral edge 44 of the recording medium 40 and the peripheral edge 29 of the rotating part 21. Also, since the peripheral driving unit 20 has the rotational angle detector 28 for detecting the angle of rotation of the recording medium 40 accompanying the rotation of the rotating part 21, a difference between the rotational angle of the rotating part 21 and the rotational angle of the recording medium 40 caused by the slip can be detected by detecting the angle of rotation of the recording medium 40. Accordingly, the peripheral positioning of the recording medium 40 can be accurately performed by adjusting the angle of rotation of the rotating part 21.

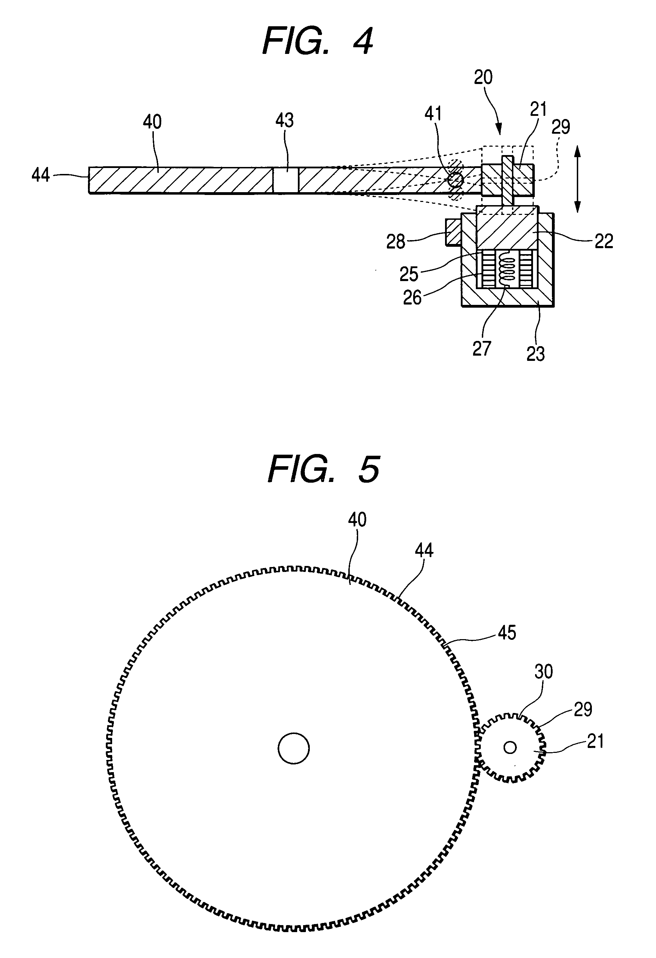

In a case in which a position of the recording medium 40 relative to the optical system is deviated in the vertical direction, a focus of the optical system may be deviated vertically. As a result, information cannot be recorded or reproduced. FIG. 4 is a schematic cross-sectional view showing only the recording medium 40 and the peripheral driving unit 20, in which the central driving unit 10 for fixing the central portion 43 of the recording medium 40 is omitted, and the vertical positioning of the recording medium 40 is simplified. The peripheral driving unit 20 can slightly move the rotating part 21 in the vertical direction by using the vertical actuating part 25. Therefore, the recording medium 40 is bent and slightly moves in the vertical direction, so that the vertical positioning of the recording medium 40 can be performed.

Hereinafter, a second embodiment will be described. As shown in FIG. 5, the peripheral edge 29 of the rotating part 21 of the present embodiment is formed with a gear-shaped groove 30 having concave and convex portions. In the same manner, the peripheral edge 44 of the recording medium 40 is formed with a gear-shaped groove 45 having concave and convex portions. As the rotating part 21 is disposed in the horizontal direction to the recording medium 40, the groove 30 of the peripheral edge 29 meshes with the groove 45 of the peripheral edge 44 of the recording medium 40. As the driving unit rotates the rotating part 21 in the peripheral direction, the recording medium 40 can be rotated with the rotation of the rotating part 21.

According to the second embodiment, as the groove 30 of the rotating part 21 meshes with the groove 45 of the recording medium 40, the peripheral edge 29 of the rotating part 21 abuts the peripheral edge 44 of the recording medium 40, and the peripheral driving unit 20 rotates the recording medium 40 with the rotation of the rotating part 21. Thus the recording medium does not cause the slip as in the first embodiment. Therefore, according to the present embodiment, the peripheral driving unit 20 does not need the rotational angle detector 28 arranged in the peripheral driving unit 20 in the first embodiment.

Although the embodiments of the invention have been described hitherto, the application of the present invention is not limited to the above-described embodiments, and it can be applied in various forms within the technical idea of the present invention. For example, the peripheral driving unit 20 can be arranged in any positions if only the peripheral driving unit 20 does not interfere with the central driving unit 10 and the horizontal driving unit 3 and the peripheral edge 29 of the rotating part 21 abuts the peripheral edge 44 of the recording medium 40.

According to the positioning device related to the present invention, the rotating part included in the peripheral driving unit is formed in the shape of a disk whose diameter is smaller than the recording medium. The rotating part is disposed in the horizontal direction to the recording medium so that a peripheral edge of the rotating part abuts the peripheral edge of the recording medium, and the peripheral rotation of the rotating part rotates the recording medium. Therefore, the recording medium can be slightly moved with respect to holograms formed away from the center of the recording medium, and thus accurate positioning can be performed.

According to the positioning device related to the present invention, since the peripheral driving unit has a rotational angle detector for detecting the rotation of the recording medium according to the peripheral rotation of the rotating part, the peripheral driving unit can adjust the angle of rotation of the rotating part in a case in which a difference occurs between the angle of rotation of the rotating part and the angle of rotation of the recording medium due to slip.

Moreover, according to the positioning device related to the present invention, the recording medium and the rotating part are respectively formed with a gear-shaped groove having concave and convex shape. Also, the recording medium and the rotating part are arranged in the horizontal direction such that the groove of the recording medium meshes with the groove of the rotating part. Therefore, the peripheral driving unit can rotates the recording medium without slip.

According to the positioning device related to the present invention, the peripheral driving unit has a horizontal actuating part for making the rotating part movable in the horizontal direction to the recording medium. The peripheral edge of the rotating part is brought into contact with or separated from the peripheral edge of the recording medium by the horizontal actuating part. Therefore, since the peripheral edge of the rotating part can be switched to a state in which it abut or does not abut the peripheral edge of the recording medium, when the recording medium is moved by the horizontal driving unit and the central driving unit, and the rotating part can be escaped to a position where the peripheral edge of the rotating part does not abut the peripheral edge of the recording medium, the driving of the recording medium can be performed smoothly.

According to the positioning device related to the present invention, the peripheral driving unit moves the rotating part in the vertical direction, and the vertical movement of the rotating part moves the recording medium in the vertical direction. Therefore, the recording medium can be positioned in the vertical direction to the optical system.

## Claims

1. A positioning device comprising:
a rotation driving unit (1) for rotating a disk-shaped recording medium (40) in a peripheral direction;
a horizontal driving unit (3) for moving the recording medium (40) in a horizontal direction;
wherein positioning of the recording medium (40) is performed by the rotation driving unit (1) and the horizontal driving unit (3),
wherein the rotation driving unit (1) includes a central driving unit (10) for rotating the recording medium (40) on a central portion (43) and a peripheral driving unit (20) for rotating the recording medium (40) at a peripheral edge (44), and
wherein the peripheral driving unit (20) includes a rotating part (21) which is rotatable separately from the central driving unit (10), the rotating part (21) is formed in the shape of a disk whose diameter is smaller than the recording medium (40) and is disposed in the horizontal direction to the disk-shaped recording medium (40), and
wherein as a peripheral edge (29) of the rotating part (21) abuts the peripheral edge (44) of the recording medium (40), the peripheral rotation of the rotating part (21) rotates the recording medium (40).

2. The positioning device according to claim 1,
**characterized in that** the peripheral driving unit (20) has a rotational angle detector (28) for detecting the rotation of the recording medium (40) according to the peripheral rotation of the rotating part (21).

3. The positioning device according to claim 1, **characterized in that** the recording medium (40) and the rotating part (21) are respectively formed with a gear-shaped groove (45) having a concave and convex shape, and the recording medium (40) and the rotating part (21) are arranged in the horizontal direction such that the groove (45) of the recording medium (40) meshes with the groove (45) of the rotating part (21).

4. The positioning device according to any one of claims 1 to 3, **characterized in that** the peripheral driving unit (20) has a horizontal actuating part (23) for making the rotating part (21) movable in the horizontal direction to the recording medium (40), and the peripheral edge (29) of the rotating part (21) is brought into contact with or separated from the peripheral edge (44) of the recording medium (40) by the horizontal actuating part (23).

5. The positioning device according to any one of claims 1 to 4, **characterized in that** the peripheral driving unit (20) has a vertical actuating part (25) which is made by arranging an elastic minute driving element (32) in the vertical direction to the rotating part (21), and the vertical actuating part (25) moves the rotating part (21) in the vertical direction, and the vertical movement of the rotating part (21) moves the recording medium (40).
